# EUROPÄISCHE PATENTANMELDUNG

(11) **EP 1 584 555 A2**
(43) Veröffentlichungstag der Anmeldung: **12.10.2005**
(21) Anmeldenummer: 05450058.2
(22) Anmeldetag: 31.03.2005
(51) Int. Cl.: B64F 1/18, F21V 29/00, F21Y 101/02

(54) **Gefahrenfeuer**

(30) Priorität: 08.04.2004 AT 2642004 U
(71) Anmelder: Rosenitsch, Harald, 1130 Wien (AT)
(72) Erfinder: Rosenitsch, Harald, 1130 Wien (AT)
(74) Vertreter: Rippel, Andreas

(57) **Zusammenfassung**

Bei einem Gefahrenfeuer, insbesondere zur Flugsicherung, bei dem als Leuchtmittel LED's angeordnet sind, sind die LED's (6, 7; 14) auf Scheiben (1, 2, 3; 11, 12, 13) angeordnet, die gegeneinander versetzt aufeinander liegen.

Dadurch wird eine gute Wärmeabfuhr und eine hohe Lichtstärke erreicht.

## Beschreibung

Die Erfindung bezieht sich auf ein Gefahrenfeuer, insbesondere zur Flugsicherung, bei dem als Leuchtmittel LED's angeordnet sind.

Von Gefahrenfeuern wird eine hohe Lichtstärke verlangt, die bekannte mit Hochleistungs-LED's samt Optik und dem damit verbundenen schmalen Abstrahlwinkel (±10°) bestückte Systeme nur in beschränktem Maße erfüllen können. Bei diesen bekannten Systemen sind die LED's in einer Reihe ringförmig angeordnet. Die dabei erzielte Lichtstärke reicht zwar in einigen Ländern zur Kennzeichnung von Windkraftanlagen aus, nicht aber für Anlagen mit höheren Anforderungen an die Lichtstärke und eventuell höherem Abstrahlwinkel.

Eine Koppelung mehrer LED's zur Erzielung einer höheren Lichtstärke ist auf einfache Weise, nämlich durch bloße Aneinanderreihung vieler LED's nicht möglich. Eine LED ist relativ klein. Die anfallende Verlustwärme konzentriert sich auf einen sehr kleinen Raum mit entsprechend hohem Temperaturniveau.

Die Erfindung hat es sich zum Ziel gesetzt, eine Gefahrenleuchte, insbesondere zur Flugsicherung, bei dem als Leuchtmittel LED's angeordnet sind, zu schaffen, die eine hohe Lichtstärke aufweist. Erreicht wird dies dadurch, daß die LED's auf Scheiben angeordnet sind, die gegeneinander versetzt aufeinander liegen.

Bei einer erfindungsgemäßen Gefahrenleuchte wird durch die Versetzung der Scheiben erreicht, daß die von den LED's abgestrahlte Wärme in genügendem Maße abgeführt wird. Es ergibt sich auch eine hohe Energieeinsparung von bis zu 85%, z.B. statt 1000 W Halogenlampe 150 W LED Leistung.

Bei einer bevorzugten Ausführungsform der Erfindung sind LED's sowohl außen an den Zahnvorsprüngen, als auch dazwischen angeordnet.

Überdies können auf jedem Zahnvorsprung und dazwischen mindestens zwei LED's untereinander angeordnet sein.

Es ist auch möglich, daß zur Erzielung eines von der Vertikalen abweichenden Abstrahlwinkels die Außenflächen der zahnartigen Scheiben nach oben oder unten verschwenkt sind.

Bei einem Ausführungsbeispiel der Erfindung bildet der Außenumfang der versetzt aufeinander liegenden Scheiben ein Vieleck und auf den Flächen dieses Vielecks sind die LED's angeordnet.

Nachstehend ist die Erfindung anhand eines in den Zeichnungen dargestellten Ausführungsbeispieles näher beschrieben, ohne auf dieses Beispiel beschränkt zu sein. Dabei zeigen:
- Fig. 1: in schaubildlicher Ansicht ein erfindungsgemäßes Gefahrenfeuer;
- Fig. 2: die Draufsicht auf eine bei einem solchen Gefahrenfeuer verwendete zahnartige Scheibe;
- Fig. 3: einen Schnitt nach der Linie A-A in Fig. 2;
- Fig. 4: einen Teil der Ansicht nach Fig. 2, wobei strichliert die darunterliegende Scheibe eingetragen ist;
- Fig. 5: in einer schaubildlichen Ansicht ähnlich Fig. 1 eine abgewandelte Ausführungsform eines Gefahrenfeuers nach der Erfindung.

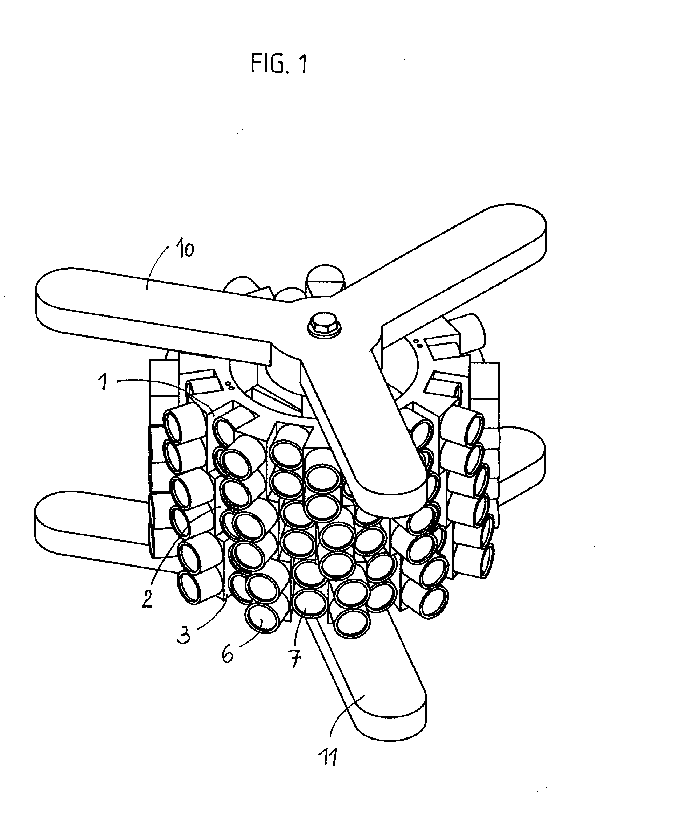

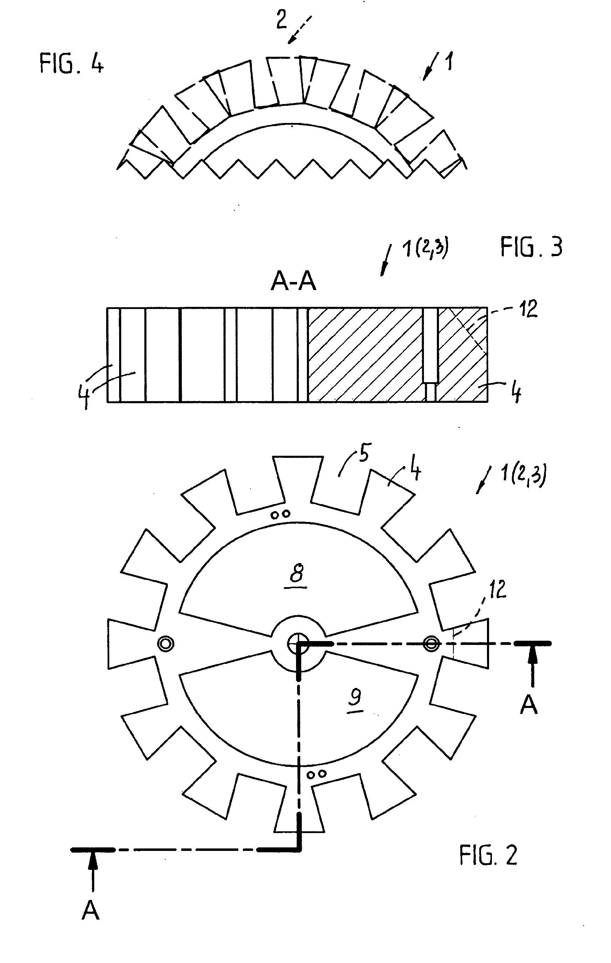

Gemäß Fig. 1 sind drei Scheiben 1, 2, 3 übereinander und versetzt gegeneinander angeordnet. Die Gestalt der Scheiben 1, 2 und 3 ist am besten aus Fig. 2 ersichtlich, in der z.B. die Scheibe 1 dargestellt ist. Demnach ist diese Scheibe 1 (und auch die beiden anderen Scheiben 2, 3) mit Zahnvorsprüngen 4 und dazwischenliegenden Vertiefungen 5 versehen.

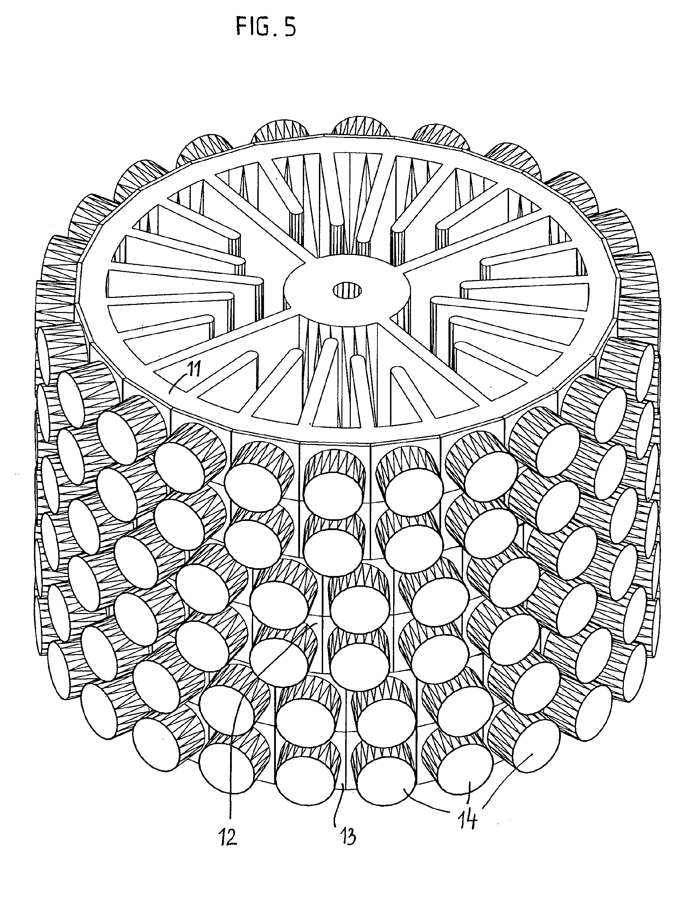

Im Beispiel wird durch die Zahnvorsprünge 4 und die Vertiefungen 5 ein Vierundzwanzigeck gebildet, sodaß der Abstand der Zahnvorsprünge 4 bzw. auch der Vertiefungen 5 voneinander 30° beträgt. Wie aus Fig. 4 ersichtlich ist, sind die Scheiben 1, 2 (und 3) jeweils um 5° gegeneinander versetzt. Sowohl an den Zahnvorsprüngen 4 als auch in den Vertiefungen 5 sind LED's 6 bzw. 7 angeordnet. Im Beispiel sind dabei auf jedem Zahnvorsprung und in jeder Vertiefung dazwischen zwei LED's untereinander angeordnet.

Durch die Versetzung der einzelnen LED's gegeneinander werden Kühlflächen geschaffen, die eine Abfuhr der von den LED's erzeugten Wärme gewährleisten. Dadurch, daß die Scheiben 1, 2, 3 in der Mitte Hohlräume 8 und 9 besitzen, kann die erzeugte Wärme nach oben abgeführt werden.

Zusammengehalten werden die Scheiben 1, 2, 3 im wesentlichen durch zwei Y-förmige Halter 10 und 11, die gegeneinander verspannt sind.

In den Fig. 2 und 3 ist durch strichlierte Linien 12 angedeutet, daß die Außenflächen der Zähne 4 abgeschrägt sein können. Dadurch wird ein von der Vertikalen abweichender Abstrahlwinkel erreicht. Die Abschrägung könnte auch in den Vertiefungen 5 erfolgen. Auch wäre eine Abschrägung im umgekehrten Sinn möglich, sodaß die Abstrahlung der LED's nach unten erfolgt.

Beim Ausführungsbeispiel nach Fig. 5 liegen wieder drei Scheiben 11, 12, 13 gegeneinander versetzt aufeinander. Der Außenumfang der Scheiben 11, 12, 13 bildet, so wie beim vorstehend beschriebenen Ausführungsbeispiel, ein Vierundzwanzigeck. Auf den einzelnen Flächen dieses Vierundzwanzigeckes sind LED's 14 montiert. Auf jeder Fläche befinden sich dabei zwei LED's 14 untereinander.

Auch bei diesem Ausführungsbeispiel wird durch die versetzte Anordnung der Scheiben 11, 12, 13, und damit der zahnartig vorspringenden LED's 14 eine gute Wärmeabfuhr erreicht.

Im Rahmen der Erfindung sind zahlreiche Abänderungen möglich. So kann die Anzahl der übereinanderliegenden Scheiben ohne weiteres vergrößert werden. Auch muß es sich bei den einzelnen Scheiben keinesfalls um ein Vierundzwanzigeck handeln.

## Patentansprüche

1. Gefahrenfeuer, insbesondere zur Flugsicherung, bei dem als Leuchtmittel LED's angeordnet sind, **dadurch gekennzeichnet, daß** die LED's (6, 7; 14) auf Scheiben (1, 2, 3; 11, 12, 13) angeordnet sind, die gegeneinander versetzt aufeinander liegen.

2. Gefahrenfeuer nach Anspruch 1, **dadurch gekennzeichnet, daß** LED's (6, 7) sowohl außen an Zahnvorsprüngen (4) als auch in den dazwischen liegenden Vertiefungen (5) angeordnet sind.

3. Gefahrenfeuer nach Anspruch 2, **dadurch gekennzeichnet, daß** auf jedem Zahnvorsprung (4) und in den Vertiefungen (5) dazwischen mindestens zwei LED's (6, 7) untereinander angeordnet sind.

4. Gefahrenfeuer nach einem der Ansprüche 1 bis 3, **dadurch gekennzeichnet, daß** zur Erzielung eines von der Vertikalen abweichenden Abstrahlwinkels die Außenflächen der Scheiben (1, 2, 3) nach oben oder unten verschwenkt sind.

5. Gefahrenfeuer nach Anspruch 1, **dadurch gekennzeichnet, daß** der Außenumfang der versetzt aufeinander liegenden Scheiben (11, 12, 13) ein Vieleck bildet und auf den Flächen dieses Vieleckes die LED's (14) angeordnet sind.
